# EUROPEAN PATENT APPLICATION

(11) **EP 2 204 993 A1**
(43) Date of publication of application: **07.07.2010**
(21) Application number: 08840974.3
(22) Date of filing: 09.10.2008
(51) Int. Cl.: H04N 7/01

(54) **SCANNING LINE INTERPOLATION DEVICE AND SCANNING LINE INTERPOLATION METHOD**

(30) Priority: 24.10.2007 JP 2007276726
(71) Applicant: Panasonic Corporation, Kadoma-shi Osaka 571-8501 (JP)
(72) Inventor: ARIMOTO, Katsuyuki, Osaka 540-6207 (JP)
(74) Representative: Gassner, Wolfgang
(86) International application number: PCT/JP2008/002857
(87) International publication number: WO 2009/054101

(57) **Abstract**

An interpolation processing section detects an angle of an edge in an image, and based on the detected angle, determines a pixel value of an interpolation target pixel in an oblique area in which there is an oblique edge by performing oblique interpolation, and determines a pixel value of an interpolation target pixel in a non-oblique area which is an area excluding the oblique area by performing vertical interpolation. A nonuniform sharpening section performs sharpening processing, in a direction vertical to a scanning line, more strongly for the non-oblique area in the image for which a scanning line has been interpolated by the interpolation processing section, than for the oblique area. Thus, unnaturalness at the boundary between, of the edge whose angle gradually varies, a part for which oblique interpolation has been performed and a part for which vertical interpolation has been performed, can be reduced.

## Description

### TECHNICAL FIELD

The present invention relates to a scanning line interpolation apparatus and a scanning line interpolation method which interpolate a scanning line for an image signal.

### BACKGROUND ART

Conventionally, as a scanning line interpolation apparatus which performs processing of interpolating a scanning line, such as conversion of a video signal for which interlace scan has been performed into a video signal for which progressive scan has been performed, there has been known a scanning line interpolation apparatus having a function (hereinafter, referred to as oblique interpolation function) of determining a pixel value of an interpolation target pixel, based on a correlation between at least two pixels positioned in an oblique direction as seen from the interpolation target pixel (for example, see Patent Document 1). The scanning line interpolation apparatus having the oblique interpolation function is capable of appropriately reproducing an oblique edge.
Patent Document 1: Japanese Laid-Open Patent Publication No. H11-146346

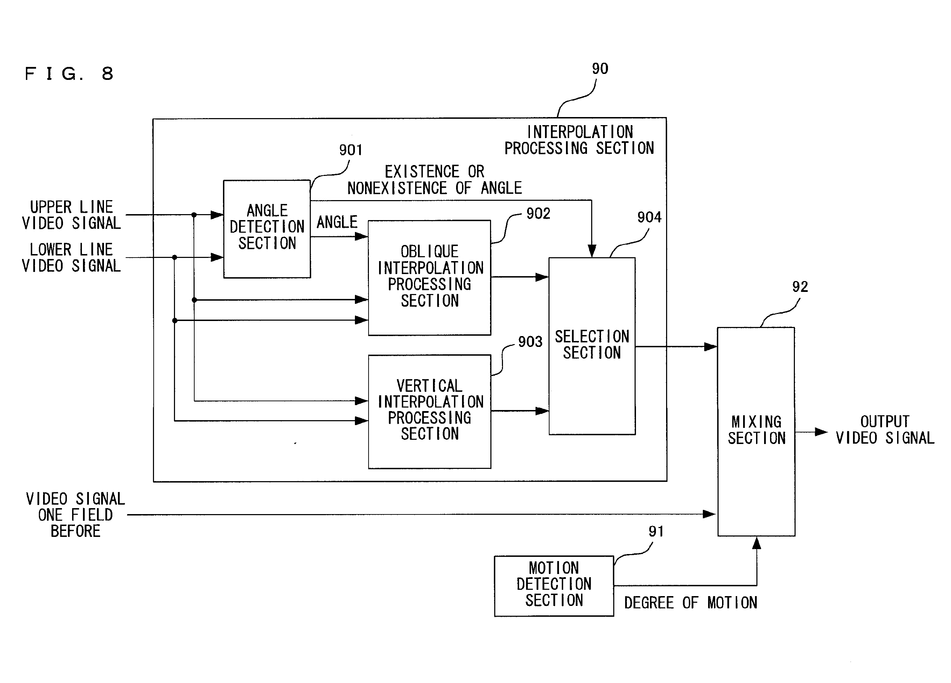

FIG. 8 shows an example of a configuration of a conventional scanning line interpolation apparatus having the oblique interpolation function. The conventional scanning line interpolation apparatus includes an interpolation processing section 90, a motion detection section 91, and a mixing section 92. The interpolation processing section 90 determines a pixel value of an interpolation target pixel by performing in-field interpolation. The motion detection section 91 and the mixing section 92 provide a so-called motion adaptive IP conversion function.

The interpolation processing section 90 includes an angle detection section 901, an oblique interpolation processing section 902, a vertical interpolation processing section 903, and a selection section 904. By referring to an upper line video signal which is a video signal on a scanning line next to and above the interpolation target pixel, and to a lower line video signal which is a video signal on a scanning line next to and below the interpolation target pixel, the angle detection section 901 detects whether or not the interpolation target pixel is on an oblique edge, and when the interpolation target pixel is on an oblique edge, detects the angle of the oblique edge (that is, detects the angle or the slope of the edge with respect to a reference direction (for example, horizontal direction or vertical direction)). Note that even if the interpolation target pixel is on an oblique edge, when the angle of the oblique edge is almost horizontal, the angle detection section 901 cannot detect the angle of the oblique edge. The oblique interpolation processing section 902 determines an oblique interpolation pixel value, based on a pixel value of a pixel, positioned in the direction indicated by the angle detected by the angle detection section 901, as seen from the interpolation target pixel. The vertical interpolation processing section 903 determines a vertical interpolation pixel value, based on a pixel value of a pixel positioned in the direction vertical to a scanning line, as seen from the interpolation target pixel. The selection section 904 outputs the oblique interpolation pixel value outputted from the oblique interpolation processing section 902, as a pixel value of an interpolation target pixel in an area, of the image, from which the angle of an oblique edge has been detected by the angle detection section 901, and outputs the vertical interpolation pixel value outputted from the vertical interpolation processing section 903, as a pixel value of an interpolation target pixel in an area, of the image, from which the angle of an oblique edge has not been detected by the angle detection section 901.

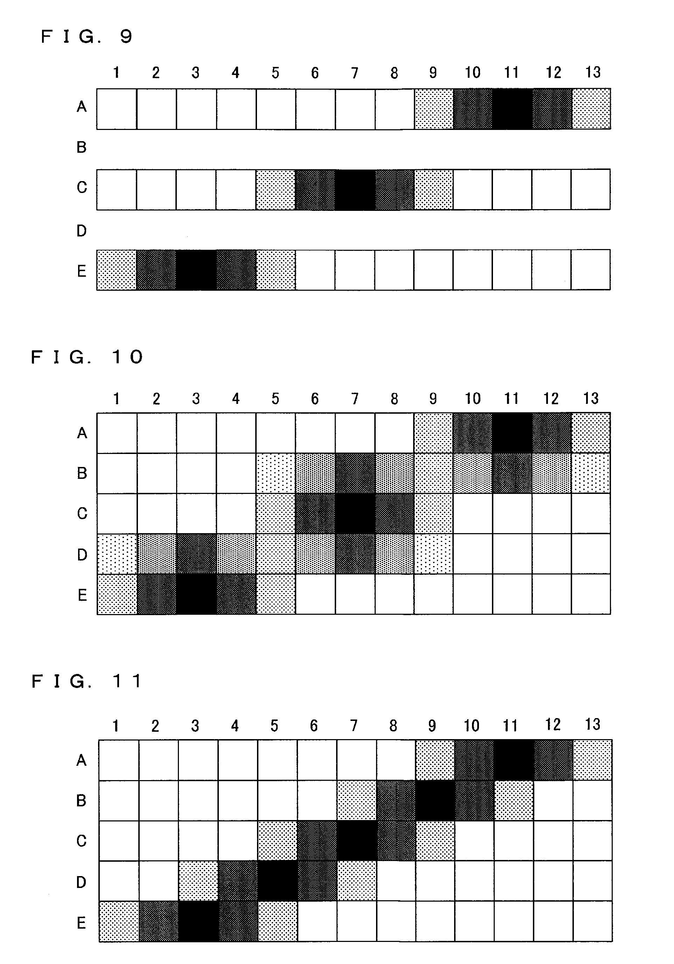

FIG. 9 shows an example of a video signal for which processing of interpolating a scanning line is yet to be performed. When the video signal shown in FIG. 9 is processed by using a scanning line interpolation apparatus which does not have the oblique interpolation function, a scanning line is interpolated by performing vertical interpolation, and therefore, an oblique edge (in this case, oblique line) is blurred as shown in FIG. 10. However, when the video signal shown in FIG. 9 is processed by using the scanning line interpolation apparatus which has the oblique interpolation function as shown in FIG. 8, a scanning line is interpolated by performing oblique interpolation, and therefore, an oblique edge is clearly displayed as shown in FIG. 11.

### DISCLOSURE OF THE INVENTION

### PROBLEMS TO BE SOLVED BY THE INVENTION

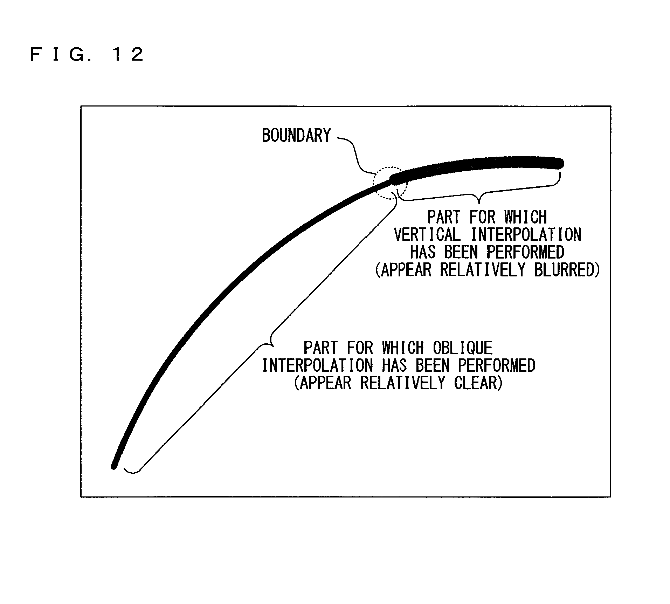

However, when a scanning line is interpolated for a video signal including an edge whose angle gradually varies as shown in FIG. 12 by using the conventional scanning line interpolation apparatus having the oblique interpolation function, the angle of the edge cannot be detected from a part, of the edge, whose angle is almost horizontal, and therefore, a scanning line is interpolated by performing vertical interpolation instead of oblique interpolation. As a result, there is the following problem. That is, as shown in FIG. 12, although a part, of the edge, for which oblique interpolation has been performed appears clear, a part, of the edge, for which vertical interpolation has been performed appears relatively blurred. Thus, the boundary between these parts appears unnatural.

Therefore, an object of the present invention is to provide a scanning line interpolation apparatus and a scanning line interpolation method which are capable of reducing unnaturalness at the boundary between, of the edge whose angle gradually varies, a part (oblique area) for which oblique interpolation has been performed and a part (non-oblique area) for which vertical interpolation has been performed.

### SOLUTION TO THE PROBLEMS

To achieve the above objects, the present invention has the following aspects. Note that the reference numerals in the parentheses merely indicate an exemplary correspondence with the drawings so as to aid in understanding the present invention, and are not intended to limit, in any way, the scope of the present invention.

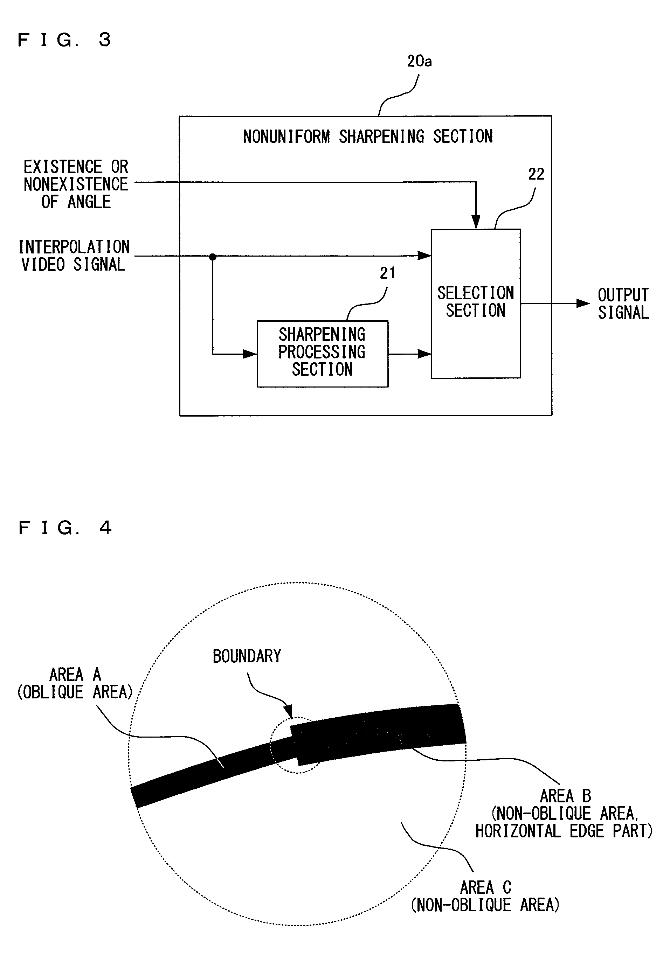

A scanning line interpolation apparatus of the present invention is a scanning line interpolation apparatus which interpolates a scanning line for an image signal, the scanning line interpolation apparatus comprising an interpolation processing section (10), and a nonuniform sharpening section (20). The interpolation processing section detects an angle of an edge in an image (11), and which, based on the detected angle, determines a pixel value of an interpolation target pixel in an oblique area (FIG. 4) in which there is an oblique edge by performing oblique interpolation (12), and determines a pixel value of an interpolation target pixel in a non-oblique area (FIG. 4) which is an area excluding the oblique area by performing vertical interpolation (13). The nonuniform sharpening section performs sharpening processing, in a direction vertical to a scanning line, more strongly for the non-oblique area in the image for which a scanning line has been interpolated by the interpolation processing section, than for the oblique area.

Note that the scanning line interpolation apparatus may further comprise a horizontal edge detection section (23) which detects a horizontal edge that is an edge extending almost parallel to a scanning line in the image, and the nonuniform sharpening section may perform sharpening processing more strongly for a horizontal edge part (FIG. 4) of the non-oblique area than for the oblique area.

Moreover, the horizontal edge detection section may further detect an intensity of the horizontal edge, and the nonuniform sharpening section may perform stronger sharpening processing for a part, of the non-oblique area, in which the horizontal edge has a greater intensity.

Alternatively, the nonuniform sharpening section may change a strength at which sharpening processing is performed for a part of the horizontal edge part of the non-oblique area, based on a distance from the part of the horizontal edge part to the oblique area which is continuous from the horizontal edge part

Moreover, when the distance is smaller than a predetermined threshold value, the nonuniform sharpening section may perform sharpening processing more strongly for the part of the horizontal edge part than when the distance is larger than the predetermined threshold value.

A scanning line interpolation method of the present invention is a scanning line interpolation method of interpolating a scanning line for an image signal, the scanning line interpolation method comprising an interpolation processing step, and a nonuniform sharpening step. In the interpolation processing step, an angle of an edge in an image is detected, and based on the detected angle, a pixel value of an interpolation target pixel in an oblique area in which there is an oblique edge is determined by performing oblique interpolation, and a pixel value of an interpolation target pixel in a non-oblique area which is an area excluding the oblique area is determined by performing vertical interpolation. In the nonuniform sharpening step, sharpening processing is performed, in a direction vertical to a scanning line, more strongly for the non-oblique area in the image for which a scanning line has been interpolated in the interpolation processing step, than for the oblique area.

Note that the scanning line interpolation method may further comprise a horizontal edge detection step of detecting a horizontal edge that is an edge extending almost parallel to a scanning line in the image, and in the nonuniform sharpening step, sharpening processing may be performed more strongly for a horizontal edge part of the non-oblique area than for the oblique area.

Moreover, in the horizontal edge detection step, an intensity of the horizontal edge may be further detected, and in the nonuniform sharpening step, stronger sharpening processing may be performed for a part, of the non-oblique area, in which the horizontal edge has a greater intensity.

Alternatively, in the nonuniform sharpening step, a strength at which sharpening processing is performed for a part of the horizontal edge part of the non-oblique area may be changed, based on a distance from the part of the horizontal edge part to the oblique area which is continuous from the horizontal edge part.

Moreover, in the nonuniform sharpening step, when the distance is smaller than a predetermined threshold value, sharpening processing may be performed more strongly for the part of the horizontal edge part than when the distance is larger than the predetermined threshold value.

### EFFECT OF THE INVENTION

According to the present invention, unnaturalness at the boundary between, of the edge whose angle gradually varies, a part (oblique area) for which oblique interpolation has been performed and a part (non-oblique area) for which vertical interpolation has been performed, can be reduced.

### BRIEF DESCRIPTION OF THE DRAWINGS

[FIG. 1] FIG. 1 is a block diagram showing a configuration of a scanning line interpolation apparatus according to a first embodiment of the present invention.
[FIG. 2] FIG. 2 is a block diagram showing a configuration of an interpolation processing section 10.
[FIG. 3] FIG. 3 is a block diagram showing a configuration of a nonuniform sharpening section according to the first embodiment.
[FIG. 4] FIG. 4 shows a boundary between, of an edge whose angle gradually varies, a part for which oblique interpolation has been performed and a part for which vertical interpolation has been performed.
[FIG. 5] FIG. 5 is a block diagram showing a configuration of a nonuniform sharpening section according to a second embodiment.
[FIG. 6] FIG. 6 is a block diagram showing a configuration of a nonuniform sharpening section according to a third embodiment.
[FIG. 7] FIG. 7 is a block diagram showing a configuration of a nonuniform sharpening section according to a fourth embodiment.
[FIG. 8] FIG. 8 is a block diagram showing a configuration of a conventional scanning line interpolation apparatus.
[FIG. 9] FIG. 9 shows a pixel value for which interpolation processing is yet to be performed.
[FIG. 10] FIG. 10 shows a pixel value for which vertical interpolation processing has been performed.
[FIG. 11] FIG. 11 shows a pixel value for which oblique interpolation processing has been performed.
[FIG. 12] FIG. 12 shows an image for which a scanning line has been interpolated by using the conventional scanning line interpolation apparatus.

### DESCRIPTION OF THE REFERENCE CHARACTERS

10 interpolation processing section
11 angle detection section
12 oblique interpolation processing section
13 vertical interpolation processing section
14 selection section
20, 20a, 20b, 20c, 20d nonuniform sharpening section
21 sharpening processing section
22 selection section
23 horizontal edge detection section
24 mixing section
25 horizontal edge intensity detection section
26 mixing section
27 boundary distance detection section
30 motion detection section
40 mixing section

### BEST MODE FOR CARRYING OUT THE INVENTION

Hereinafter, various embodiments of the present invention will be described with reference to the drawings.

### (First embodiment)

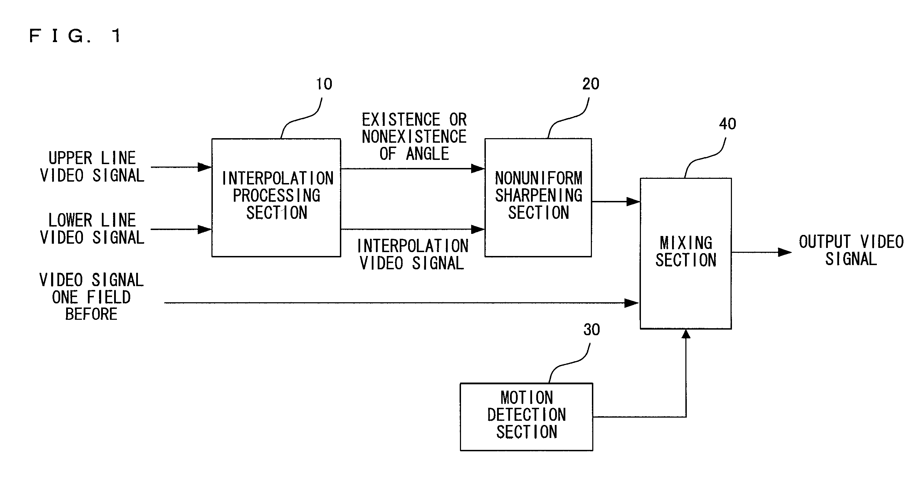

FIG. 1 is a block diagram showing a configuration of a scanning line interpolation apparatus according to a first embodiment of the present invention. As shown in FIG. 1, the scanning line interpolation apparatus includes an interpolation processing section 10, a nonuniform sharpening section 20, a motion detection section 30, and a mixing section 40.

The interpolation processing section 10 generates an interpolation video signal, based on an upper line video signal and a lower line video signal. Specifically, the interpolation processing section 10 has a function of detecting the angle of an edge in an image, and of, based on the detected angle, determining a pixel value of an interpolation target pixel in an oblique area in which there is an oblique edge by performing oblique interpolation, and determining a pixel value of an interpolation target pixel in a non-oblique area which is an area excluding the oblique area by performing vertical interpolation. The details of the interpolation processing section 10 will be described later.

The nonuniform sharpening section 20 performs sharpening processing, in the direction vertical to the scanning line, more strongly for the non-oblique area in the image for which a scanning line has been interpolated by the interpolation processing section 10, than for the oblique area. The details of the nonuniform sharpening section 20 will be described later.

The motion detection section 30 and the mixing section 40 provide a so-called motion adaptive IP conversion function, and the function is known art which is not particularly relevant to the present invention. Therefore, the detailed description thereof is omitted.

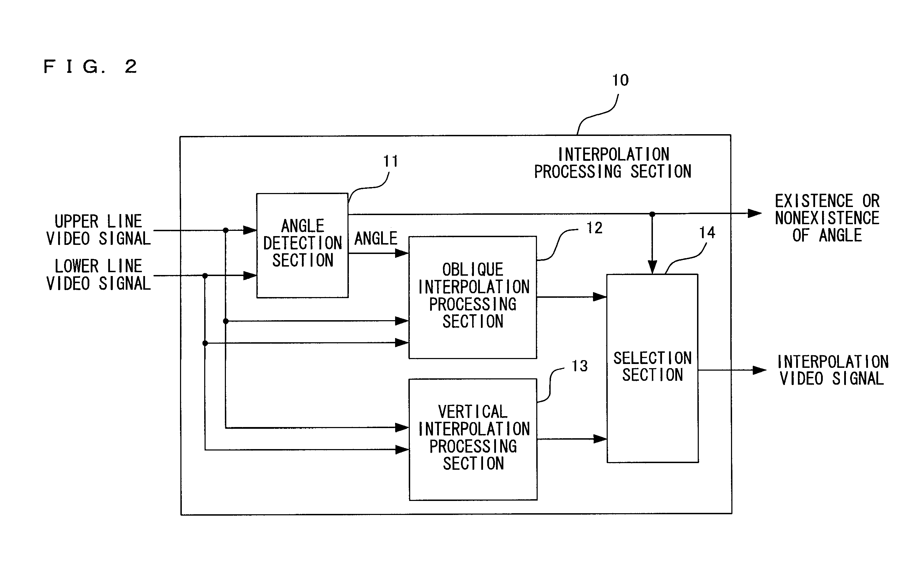

Next, with reference to FIG. 2, the details of the interpolation processing section 10 will be described. The interpolation processing section 10 includes an angle detection section 11, an oblique interpolation processing section 12, a vertical interpolation processing section 13, and a selection section 14.

The angle detection section 11 detects the angle of an edge in an image. More specifically, by referring to an upper line video signal which is a video signal on a scanning line next to and above an interpolation target pixel, and to a lower line video signal which is a video signal on a scanning line next to and below the interpolation target pixel, the angle detection section 11 detects whether or not the interpolation target pixel is on an oblique edge, and when the interpolation target pixel is on an oblique edge, detects the angle of the oblique edge.

The oblique interpolation processing section 12 determines an oblique interpolation pixel value, based on a pixel value of a pixel positioned in the direction indicated by the angle detected by the angle detection section 11, as seen from the interpolation target pixel. Note that although oblique interpolation is performed based on an upper line video signal and a lower line video signal here, oblique interpolation may be performed by also considering a video signal on a scanning line above the scanning line on which the upper line video signal is positioned or a video signal on a scanning line below the scanning line on which the lower line video signal is positioned. Various algorithms have been conventionally devised as an algorithm of oblique interpolation processing, and such various algorithms can be adopted in the present invention.

The vertical interpolation processing section 13 determines a vertical interpolation pixel value, based on a pixel value of a pixel positioned in the direction vertical to a scanning line, as seen from the interpolation target pixel. Note that although vertical interpolation is performed based on an upper line video signal and a lower line video signal here, vertical interpolation may be performed by also considering a video signal on a scanning line above the scanning line on which the upper line video signal is positioned or a video signal on a scanning line below the scanning line on which the lower line video signal is positioned.

The selection section 14 selects an oblique interpolation pixel value outputted from the oblique interpolation processing section 12, as a pixel value of an interpolation target pixel in an area, of the image, from which the angle of an oblique edge has been detected by the angle detection section 11, and selects a vertical interpolation pixel value outputted from the vertical interpolation processing section 13, as a pixel value of an interpolation target pixel in an area, of the image, from which the angle of an oblique edge has not been detected by the angle detection section 11, thereby outputting an interpolation video signal.

Note that the angles of oblique edges detected by the angle detection section 11 vary in reliability. For example, the accuracy of detecting the angle of an oblique edge in an image having a relatively high contrast is relatively high, while the accuracy of detecting the angle of an oblique edge in an image having a relatively low contrast is relatively low. Considering the above, in an example of variations, the angle detection section 11 may calculate the degree of reliability of the angle of the detected oblique edge, and the selection section 14 may mix the oblique interpolation pixel value outputted from the oblique interpolation processing section 12, with the vertical interpolation pixel value outputted from the vertical interpolation processing section 13, at an adequate ratio in accordance with the degree of reliability of the angle of the oblique edge detected by the angle detection section 11, and output the resultant signal as a pixel value of the interpolation target pixel.

Next, with reference to FIG. 3, the details of the nonuniform sharpening section 20 will be described. Note that in FIG. 3, the reference character of the nonuniform sharpening section is denoted by 20a for the purpose of discrimination from nonuniform sharpening sections of second and third embodiments described later.

The nonuniform sharpening section 20a includes a sharpening processing section 21 and a selection section 22.

The sharpening processing section 21 performs sharpening processing, in the direction vertical to a scanning line, on the interpolation video signal outputted from the interpolation processing section 10. In general, when a scanning line is interpolated based on an upper line video signal and a lower line video signal, an image appears blurred at an edge (contour line or border line) extending in the horizontal direction or in the direction nearly equal to the horizontal direction. However, the blur is remedied in a certain degree by performing sharpening processing in the direction vertical to a scanning line.

The selection section 22 selects one of the interpolation video signal outputted from the interpolation processing section 10, and the interpolation video signal which has been sharpened by the sharpening processing section 21, in accordance with a signal (signal indicating whether or not an oblique edge has been detected) outputted from the angle detection section 11, and outputs the selected interpolation video signal as an output signal. Specifically, the interpolation video signal outputted from the interpolation processing section 10 is selected for an area (hereinafter, referred to as oblique area), of the entire area of the image, from which an oblique edge has been detected, and the interpolation video signal outputted from the sharpening processing section 21 is selected for an area (hereinafter, referred to as non-oblique area), of the entire area of the image, from which an oblique edge has not been detected. Note that in an example of variations, similarly to the aforementioned selection section 14, the selection section 22 may mix the oblique interpolation pixel value outputted from the oblique interpolation processing section 12, with the vertical interpolation pixel value outputted from the vertical interpolation processing section 13, at an adequate ratio in accordance with the degree of reliability of the angle of the oblique edge, and output the resultant signal.

FIG. 4 is an enlarged view of a part (part in which there is an edge whose angle gradually varies) of an image displayed based on the interpolation video signal outputted from the interpolation processing section 10. An area A in FIG. 4 is a part (oblique area), of the image, from which the angle of an oblique edge has been detected by the angle detection section 11. An area B and an area C are parts (non-oblique areas), of the image, from which the angle of an oblique edge has been detected by the angle detection section 11. The degree of blur, in the area A, caused due to IP conversion is relatively small since oblique interpolation is performed for the area A by the oblique interpolation processing section 12. On the other hand, the degree of blur, in the area B and the area C, caused due to IP conversion is relatively large since vertical interpolation is performed for the area B and the area C by the vertical interpolation processing section 13. However, since the nonuniform sharpening section 20a performs sharpening processing, in the vertical direction, only for the area B and the area C, blur in the area B is remedied and the aforementioned problem that the boundary appears unnatural is remedied.

Note that although in the present embodiment, sharpening processing is not performed for an oblique area, the present invention is not limited thereto. Only by performing sharpening processing more strongly for a non-oblique area than for an oblique area, unnaturalness at the boundary is remedied.

### (Second embodiment)

Next, a scanning line interpolation apparatus according to a second embodiment of the present invention will be described. Note that the second embodiment and the first embodiment are different from each other only in the nonuniform sharpening section 20. Therefore, only the nonuniform sharpening section 20 will be described in detail here.

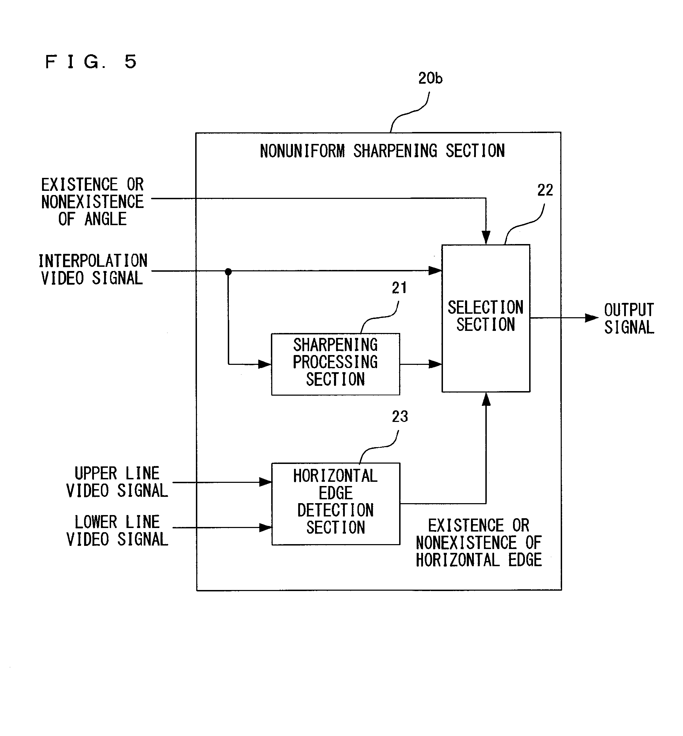

FIG. 5 is a block diagram showing a configuration of a nonuniform sharpening section 20b of the second embodiment. As shown in FIG. 5, the nonuniform sharpening section 20b includes the sharpening processing section 21, the selection section 22, and the horizontal edge detection section 23.

The sharpening processing section 21 performs sharpening processing, in the direction vertical to a scanning line, on the interpolation video signal outputted from the interpolation processing section 10.

The horizontal edge detection section 23 detects an edge (horizontal edge) extending in the direction along a scanning line or the direction nearly equal to the direction along a scanning line, based on the upper line video signal and the lower line video signal (as necessary, a video signal on a scanning line above the scanning line on which the upper line video signal is positioned or a video signal on a scanning line below the scanning line on which the lower line video signal is positioned may also be considered). Any known technique such as a method using a Sobel filter can be used as a method of detecting the horizontal edge. The horizontal edge detection section 23 detects the area B (horizontal edge part) in FIG. 4.

The selection section 22 selects one of the interpolation video signal outputted from the interpolation processing section 10, and the interpolation video signal which has been sharpened by the sharpening processing section 21, in accordance with a signal (signal indicating whether or not an oblique edge has been detected) outputted from the angle detection section 11 and a signal (signal indicating whether or not a horizontal edge has been detected) outputted from the horizontal edge detection section 23, and outputs the selected interpolation video signal as an output signal. Specifically, the interpolation video signal outputted from the interpolation processing section 10 is selected for, of the entire area of the image, the oblique area (area A in FIG. 4) and the non-oblique area (area C in FIG. 4) excluding the horizontal edge part, and the interpolation video signal outputted from the sharpening processing section 21 is selected for the horizontal edge part (area B in FIG. 4) of the entire area of the image.

As described above, according to the second embodiment, sharpening processing is performed, in the vertical direction, for the horizontal edge part. Therefore, unnaturalness at the boundary as shown in FIG. 4 for example is remedied. In addition, since sharpening processing is not performed for the non-oblique area excluding the horizontal edge part, the horizontal edge part appears increasingly clear, and unnaturalness at the boundary is further remedied.

### (Third embodiment)

Next, a scanning line interpolation apparatus according to a third embodiment of the present invention will be described. Note that the third embodiment and the first embodiment are different from each other only in the nonuniform sharpening section 20. Therefore, only the nonuniform sharpening section 20 will be described in detail here.

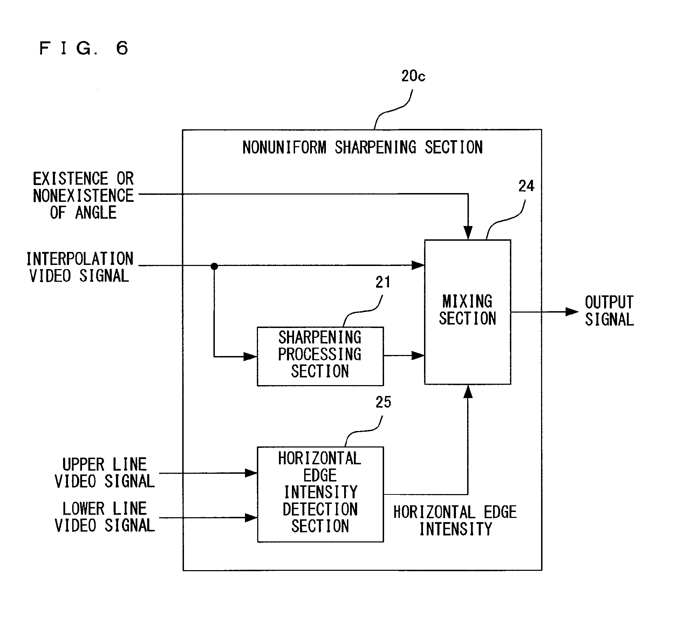

FIG. 6 is a block diagram showing a configuration of a nonuniform sharpening section 20c of the third embodiment. As shown in FIG. 6, the nonuniform sharpening section 20c includes the sharpening processing section 21, a mixing section 24, and a horizontal edge intensity detection section 25.

The sharpening processing section 21 performs sharpening processing, in the direction vertical to a scanning line, on the interpolation video signal outputted from the interpolation processing section 10.

The horizontal edge intensity detection section 25 detects the intensity of an edge (horizontal edge) extending in the direction along a scanning line or the direction nearly equal to a direction along a scanning line, based on the upper line video signal and the lower line video signal (as necessary, a video signal on a scanning line above the scanning line on which the upper line video signal is positioned or a video signal on a scanning line below the scanning line on which the lower line video signal is positioned may also be considered). Any known technique such as a method using a Sobel filter can be used as a method of detecting the intensity of the horizontal edge. The horizontal edge intensity detection section 25 figures out the degree in which the horizontal edge stands out.

The mixing section 24 mixes the interpolation video signal outputted from the interpolation processing section 10, with the interpolation video signal which has been sharpened by the sharpening processing section 21, at an adequate ratio in accordance with a signal (signal indicating whether or not an oblique edge has been detected) outputted from the angle detection section 11 and a signal (signal indicating the intensity of the horizontal edge) outputted from the horizontal edge intensity detection section 25, and outputs the resultant signal as an output signal. Specifically, the interpolation video signal outputted from the interpolation processing section 10 is selected and outputted for the oblique area (area A in FIG. 4) of the entire area of the image. In addition, the interpolation video signal outputted from the interpolation processing section 10 and the interpolation video signal which has been sharpened by the sharpening processing section 21 are mixed with each other such that if the intensity of the horizontal edge is greater, the ratio of the interpolation video signal which has been sharpened by the sharpening processing section 21 is higher, and the resultant signal is outputted for the non-oblique area (area B and area C in FIG. 4) of the entire area of the image.

As described above, according to the third embodiment, sharpening processing is performed, in the vertical direction, more strongly for a horizontal edge part which relatively stands out, the horizontal edge part which relatively stands out appears increasingly clear, and unnaturalness at the boundary is further remedied.

### (Fourth embodiment)

Next, a scanning line interpolation apparatus according to a fourth embodiment of the present invention will be described. Note that the fourth embodiment and the first embodiment are different from each other only in the nonuniform sharpening section 20. Therefore, only the nonuniform sharpening section 20 will be described in detail here.

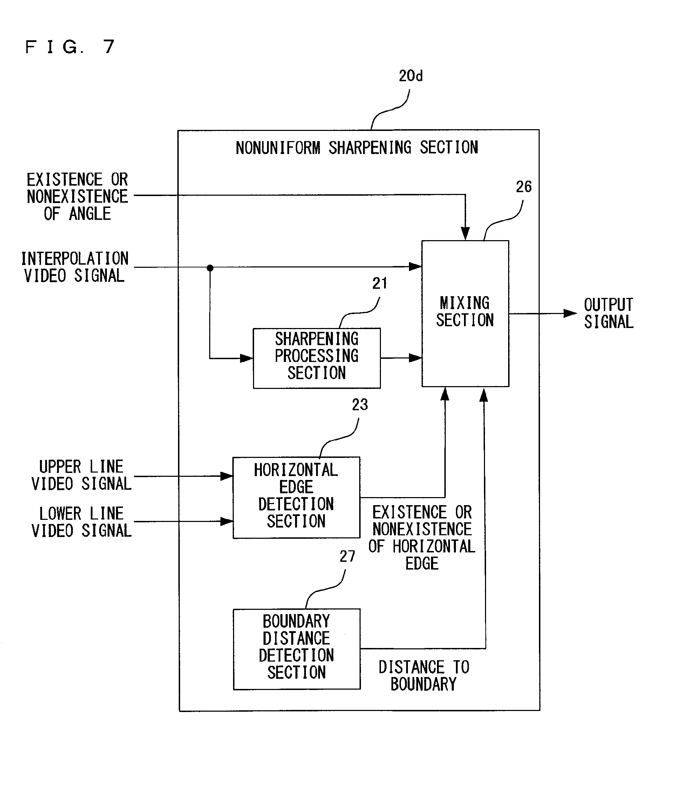

FIG. 7 is a block diagram showing a configuration of a nonuniform sharpening section 20d of the fourth embodiment. As shown in FIG. 7, the nonuniform sharpening section 20d includes the sharpening processing section 21, the horizontal edge detection section 23, a mixing section 26, and a boundary distance detection section 27.

The sharpening processing section 21 performs sharpening processing, in the direction vertical to a scanning line, on the interpolation video signal outputted from the interpolation processing section 10.

The horizontal edge detection section 23 detects a horizontal edge, based on the upper line video signal and the lower line video signal (as necessary, a video signal on a scanning line above the scanning line on which the upper line video signal is positioned or a video signal on a scanning line below the scanning line on which the lower line video signal is positioned may also be considered).

The boundary distance detection section 27 calculates the distance from a pixel to the boundary (that is, as shown in FIG. 4, the boundary between, of an edge whose angle gradually varies, a part for which oblique interpolation has been performed and a part for which vertical interpolation has been performed) positioned in the horizontal direction as seen from the pixel. More specifically, the boundary distance detection section 27 detects the distance from the pixel to an oblique area (more preferably, oblique area from which an oblique edge having an almost horizontal angle is detected) which is nearest to the pixel and is positioned on the same scanning line on which the pixel is positioned. Note that although the above-described "boundary positioned in the horizontal direction as seen from the pixel" is typically a boundary positioned on the same scanning line on which the pixel is positioned, the present invention is not limited thereto. In an example of variations, the "boundary positioned in the horizontal direction as seen from the pixel" may be a boundary positioned on a scanning line adjacent to the scanning line on which the pixel is positioned, instead of the boundary positioned on the same scanning line on which the pixel is positioned.

The mixing section 26 mixes the interpolation video signal outputted from the interpolation processing section 10, with the interpolation video signal which has been sharpened by the sharpening processing section 21, at an adequate ratio in accordance with a signal (signal indicating whether or not an oblique edge is detected) outputted from the angle detection section 11, a signal (signal indicating whether or not a horizontal edge is detected) outputted from the horizontal edge detection section 23, and a signal (signal indicating the distance from the pixel to the boundary) outputted from the border distance detection section 27, and outputs the resultant signal as an output signal. Specifically, the interpolation video signal outputted from the interpolation processing section 10 is selected and outputted for, of the entire area of the image, the oblique area (area A in FIG. 4) and the non-oblique area (area C in FIG. 4) excluding the horizontal edge part. In addition, the interpolation video signal outputted from the interpolation processing section 10 and the interpolation video signal which has been sharpened by the sharpening processing section 21 are mixed with each other such that if the distance from the pixel to the boundary is shorter, the ratio of the interpolation video signal which has been sharpened by the sharpening processing section 21 is higher, and the resultant signal is outputted for the horizontal edge area (area B in FIG. 4) of the entire area of the image.

As described above, according to the fourth embodiment, sharpening processing is performed, in the vertical direction, more strongly for, particularly, a part, of a horizontal edge part, which is near to the boundary. Therefore, the part, of the horizontal edge part, which is near to the boundary appears increasingly clear, and unnaturalness at the boundary is further remedied.

### INDUSTRIAL APPLICABILITY

According to the present invention, unnaturalness at the boundary between, of the edge whose angle gradually varies, a part for which oblique interpolation has been performed and a part for which vertical interpolation has been performed, can be reduced. Therefore, the present invention can be preferably applied to, for example, a progressive scan conversion apparatus which converts a video signal for which interlace scan has been performed into a video signal for which progressive scan has been performed.

## Claims

1. A scanning line interpolation apparatus which interpolates a scanning line for an image signal, the scanning line interpolation apparatus comprising:
an interpolation processing section which detects an angle of an edge in an image, and which, based on the detected angle, determines a pixel value of an interpolation target pixel in an oblique area in which there is an oblique edge by performing oblique interpolation, and determines a pixel value of an interpolation target pixel in a non-oblique area which is an area excluding the oblique area by performing vertical interpolation; and
a nonuniform sharpening section which performs sharpening processing, in a direction vertical to a scanning line, more strongly for the non-oblique area in the image for which a scanning line has been interpolated by the interpolation processing section, than for the oblique area.

2. The scanning line interpolation apparatus according to claim 1 further comprising a horizontal edge detection section which detects a horizontal edge that is an edge extending almost parallel to a scanning line in the image
wherein the nonuniform sharpening section performs sharpening processing more strongly for a horizontal edge part of the non-oblique area than for the oblique area.

3. The scanning line interpolation apparatus according to claim 2, wherein
the horizontal edge detection section further detects an intensity of the horizontal edge, and
the nonuniform sharpening section performs stronger sharpening processing for a part, of the non-oblique area, in which the horizontal edge has a greater intensity.

4. The scanning line interpolation apparatus according to claim 2, wherein the nonuniform sharpening section changes a strength at which sharpening processing is performed for a part of the horizontal edge part of the non-oblique area, based on a distance from the part of the horizontal edge part to the oblique area which is continuous from the horizontal edge part.

5. The scanning line interpolation apparatus according to claim 4, wherein when the distance is smaller than a predetermined threshold value, the nonuniform sharpening section performs sharpening processing more strongly for the part of the horizontal edge part than when the distance is larger than the predetermined threshold value.

6. A scanning line interpolation method of interpolating a scanning line for an image signal, the scanning line interpolation method comprising:
an interpolation processing step of detecting an angle of an edge in an image, and of, based on the detected angle, determining a pixel value of an interpolation target pixel in an oblique area in which there is an oblique edge by performing oblique interpolation, and determining a pixel value of an interpolation target pixel in a non-oblique area which is an area excluding the oblique area by performing vertical interpolation; and
a nonuniform sharpening step of performing sharpening processing, in a direction vertical to a scanning line, more strongly for the non-oblique area in the image for which a scanning line has been interpolated in the interpolation processing step, than for the oblique area.

7. The scanning line interpolation method according to claim 6 further comprising a horizontal edge detection step of detecting a horizontal edge that is an edge extending almost parallel to a scanning line in the image
wherein in the nonuniform sharpening step, sharpening processing is performed more strongly for a horizontal edge part of the non-oblique area than for the oblique area.

8. The scanning line interpolation apparatus according to claim 7, wherein
in the horizontal edge detection step, an intensity of the horizontal edge is further detected, and
in the nonuniform sharpening step, stronger sharpening processing is performed for a part, of the non-oblique area, in which the horizontal edge has a greater intensity.

9. The scanning line interpolation method according to claim 7, wherein in the nonuniform sharpening step, a strength at which sharpening processing is performed for a part of the horizontal edge part of the non-oblique area is changed, based on a distance from the part of the horizontal edge part to the oblique area which is continuous from the horizontal edge part.

10. The scanning line interpolation apparatus according to claim 9, wherein in the nonuniform sharpening step, when the distance is smaller than a predetermined threshold value, stronger sharpening processing is performed for the part of the horizontal edge part than when the distance is larger than the predetermined threshold value.
